# EUROPÄISCHE PATENTSCHRIFT

(11) **EP 3 112 074 B1**
(45) Veröffentlichungstag und Bekanntmachung des Hinweises auf die Patenterteilung: **02.05.2018**
(21) Anmeldenummer: 15174256.6
(22) Anmeldetag: 29.06.2015
(51) Int. Cl.: B23K 26/14, B21D 37/14, B23Q 3/155, B23Q 3/157, B23K 26/70

(54) **DÜSENWECHSLER MIT DÜSENHALTEEINHEITEN UND EINER GESCHLOSSENEN FÜHRUNGSBAHN, UND LASERBEARBEITUNGSMASCHINE DAMIT**
NOZZLE EXCHANGER WITH NOZZLE HOLDERS AND CLOSED GUIDING LOOP, AND LASER PROCESSING MACHINE USING THE SAME
ECHANGEUR DE BUSES AVEC DES RECEPTACLES POUR BUSE ET UN GUIDAGE FERME, ET MACHINE D'USINAGE LASER EN ETANT EQUIPEE

(43) Veröffentlichungstag der Anmeldung: 04.01.2017
(73) Patentinhaber: TRUMPF Schweiz AG, 7214 Grüsch (CH)
(72) Erfinder: Tweitmann, Mathias, 8820 Wädenswil (CH); Rudow, Julian, 6300 Zug (CH); Schnyder, Simon, 8640 Rapperswil (CH); Bühler, Andreas, 8051 Zürich (CH); Morsch, Max, 66629 Oberkirchen (DE)
(74) Vertreter: Kohler Schmid Möbus Patentanwälte

(56) Entgegenhaltungen:
- EP-B1- 2 589 458
- JP-A- S61 164 738
- JP-B2- 3 433 463
- US-A- 3 886 652
- US-A- 5 688 215

## Beschreibung

Die vorliegende Erfindung betrifft einen Düsenwechsler zur Montage und/oder zur Demontage von Düsen an einer Düsenhalteeinrichtung, die insbesondere an einem Bearbeitungskopf einer Laserbearbeitungsmaschine gebildet ist, gemäß dem Oberbegriff des Anspruchs 1 (siehe z.B. EP2 589 458 A1), sowie eine Laserbearbeitungsmaschine mit einem solchen Düsenwechsler.

Düsen, die beispielsweise zur Durchführung eines Bearbeitungsprozesses an einem Bearbeitungskopf einer Laserbearbeitungsanlage angebracht werden, können durch Kollisionen mit Werkstückteilen, thermischen Belastungen, Spritzern und Verschmutzungen aus dem Bearbeitungsprozess verunreinigt oder beschädigt werden. Bei derartigen Düsen handelt es sich somit um Verschleißteile, die aus Gründen der Prozesssicherheit regelmäßig gewechselt werden sollten.

In der EP 2 589 458 B1 ist ein Düsenwechsler beschrieben, bei dem mehrere Düsenhalteeinheiten bzw. Düsenaufnahmen an festen Positionen in einem Magazin angeordnet sind. Zur Montage bzw. Demontage einer Düse wird ein Bearbeitungskopf einer Laserbearbeitungsmaschine über einer Düsenhalteeinheit positioniert. Die Düsenhalteeinheiten werden mittels eines Zahnriemens angetrieben und in eine Drehbewegung um eine jeweilige Mittenachse versetzt, um die Düse an dem Bearbeitungskopf zu montieren bzw. zu demontieren. Für die Montage/Demontage der Düsen ist es erforderlich, dass der Bearbeitungskopf über den gesamten Lagerbereich der Düsenhalter verfahren wird.

Ein Düsenmagazin für eine Laserbearbeitungsmaschine ist auch in der EP 1 602 439 A2 beschrieben. Das Düsenmagazin weist eine Mehrzahl von Düsenhalteeinheiten auf, die in einer oder mehreren Reihen oder in einer Matrix angeordnet sind. Das Düsenmagazin kann eine staubdichte Abdeckung aufweisen, welche die Oberseite des Düsenmagazins überdeckt und sich nur öffnet, wenn eine Düse der Laserbearbeitungsmaschine gewechselt wird.

Aus der DE 20 2008 010 577 U1 ist es bekannt, für den Düsenwechsel einen Düsenwechsler zu verwenden, bei dem mehrere Düsenhalteeinheiten in einem Düsenmagazin untergebracht sind. Das Düsenmagazin kann beispielsweise als Revolvermagazin ausgebildet sein und einen Düsenhalterträger aufweisen, der mittels eines Antriebsmotors um eine Revolver-Drehachse drehbar ist, um eine an dem Düsenhalterträger angebrachten Düsenhalteeinheit in einer Montage/Demontage-Stellung zuzustellen. Zur Montage und/oder Demontage einer schraubbaren Düse kann die in der Montage/Demontage-Stellung angeordnete Düsenhalteeinheit mittels eines Montage/Demontage-Antriebs um ihre Düsenhalter-Drehachse gedreht werden.

Aus der US 3,818,580 ist eine Werkzeugmaschine mit automatischem Werkzeugwechsel bekannt geworden, wobei die Werkzeugmaschine eine Spindel, ein Werkzeugaufbewahrungsmagazin und ein Werkzeugwechselglied aufweist, das ein Werkzeug zwischen dem Magazin und der Spindel bewegen kann. Das Magazin besteht aus einer endlosen Führungs- oder Fahrschiene mit einer Reihe von an ihr verschiebbaren Schlitten, die je lösbar ein Werkzeug tragen können, sowie aus einer Einrichtung zum Antreiben der Schlitten entlang der Führungsschiene.

In der DD 248 534 A1 ist ein Werkzeugspeicher mit einer aus Werkzeugen gebildeten endlosen Schubgliederkette bekannt geworden, die aus Aufnahmewagen für Werkzeuge gebildet sind, welche in einer Führung umlaufen. Ein linearer Führungsabschnitt der Führung, der mit einem zweiten Führungsabschnitt zu einer Dreheinheit verbunden ist, ist austauschbar ausgebildet. In der DD 216 601 A3 ist ein ähnlicher Werkzeugspeicher beschrieben, bei dem ein Teil der Führung gleichzeitig Bestandteil eines weiteren Werkzeugspeichers ist, der mindestens zwei alternative Teile einer Führungsbahn zur Aufnahme verschiedener Werkzeuge aufweist.

### Aufgabe der Erfindung

Aufgabe der vorliegenden Erfindung ist es, einen Düsenwechsler sowie eine Laserbearbeitungsmaschine mit einem solchen Düsenwechsler bereitzustellen, bei denen eine Mehrzahl von Düsenhalteeinheiten platzsparend untergebracht werden kann.

### Gegenatand der Erfindung

Ein Düsenwechsler zur Montage und/oder zur Demontage von Düsen an einer Düsenhalteeinrichtung gemäß der Erfindung ist im Anspruch 1 definiert. Erfindungsgemäß wird vorgeschlagen, die Düsenhalteeinheiten platzsparend in einer grundsätzlich beliebig geformten und in sich geschlossenen (endlosen) Führungsbahn zu lagern. Die Düsenhalteeinheiten sind in der Führungsbahn in einer Reihe hintereinander angeordnet und benachbarte Düsenhalteeinheiten liegen typischer Weise an Kontaktflächen aneinander an, so dass eine große Anzahl von Düsenhalteeinheiten auf kleinem Raum gelagert werden kann. Die einzelnen Düsenhalteeinheiten sind nicht dauerhaft miteinander verbunden, können aber aufgrund der gegenseitigen Anlage wie die Kettenglieder einer herkömmlichen Kette bewegt bzw. verschoben werden, d.h. die Bewegung einer Düsenhalteeinheit entlang der Führungsbahn bewirkt eine entsprechende Verschiebung der anderen Düsenhalteeinheiten entlang der Führungsbahn, so dass die Düsenhalteeinheiten in einem geschlossenen Kreislauf entlang der Führungsbahn umlaufen. Eine solche schubfeste Anordnung der Düsenhalteeinheiten wird auch als Schubgliederkette bezeichnet. Es ist ggf. möglich, dass eine Düsenhalteeinheit der Schubgliederkette entlang eines Abschnitts der Bewegungsbahn nicht mit benachbarten Düsenhafteeinheiten in Kontakt steht, beispielsweise wenn dieser an der Übergabeposition vereinzelt werden soll. Verlässt die Düsenhalteeinheit diesen Abschnitt der Bewegungsbahn, liegt diese jedoch wieder an einer benachbarten Düsenhalteeinheit an, so dass die Schubgliederkette fortgesetzt wird.

Die schubfeste Anordnung der lose aneinander anliegenden Düsenhalteeinheiten in einer Schubgliederkette ermöglicht es zudem, einzelne der Düsenhalteeinheiten manuell oder ggf. automatisiert aus der Führungsbahn zu entnehmen und gegen andere auszutauschen. Dies kann erforderlich sein, wenn unterschiedliche Typen von Düsen (mit unterschiedlichen Außenkonturen) in den Düsenhalteeinheiten gelagert werden sollen und die Düsenhalteeinheiten unterschiedliche, an den jeweiligen Düsentyp angepasste Düsenaufnahmen bzw. Düsenhalter aufweisen. Zudem vereinfacht eine solche lose Anordnung die Vereinzelung und Positionierung, sowie eine Drehung der Düsenhalteeinheiten bzw. der Düsenaufnahmen um ihre jeweilige Düsenhalter-Drehachse, was für die Montage/Demontage von Düsen vorteilhaft ist, die an der Düsenhalteeinrichtung mit Hilfe einer Schraubverbindung befestigt werden sollen.

Die Düsenhalteeinheiten weisen typischer Weise eine zylindrische Grundform (Außengeometrie) auf, wobei eine jeweilige Düse typischer Weise entlang einer Düsen-Entnahmerichtung, die parallel zur Mittel- bzw. Zylinderachse der Düsenhalteeinheit verläuft, aus der Düsenaufnahme entnommen oder in dieser abgelegt wird. Die Düsenhalteeinrichtung, genauer gesagt die Düsenaufnahme, weist zu diesem Zweck und gemäß der Erfindung einen nach oben (in Düsen-Entnahmerichtung) offenen Düsenlagerraum auf.

Bei einer Ausführungsform weisen die Düsenhalteeinheiten mindestens einen (axialen) Führungsabschnitt mit einer umlaufenden, zu einer Düsenhalter-Achse drehsymmetrischen, insbesondere kreisförmigen Außenkontur auf. Die umlaufende Außenkontur begrenzt typischer Weise die Außenkontur einer jeweiligen Düsenhalteeinheit, d.h. die Düsenhalteeinheit weist in einer Richtung senkrecht zur Mittel- bzw. Zylinderachse keine über die umlaufende Außenkontur nach außen überstehenden Bereiche auf. Der (axiale) Führungsabschnitt kann an einer Außenseite einer Hülse der Düsenhalteeinheit gebildet sein und dort beispielsweise angeformt, in der Art eines Ringes aufgepresst oder in der Art eines Ringes ausgebildet und über ein Lager, insbesondere ein Kugellager, mit der Hülse bzw. dem Grundkörper der Düsenhalteeinheit in Verbindung stehen, d.h. der Führungsabschnitt kann ein Kugellager bilden. Die Verwendung eines Kugellagers ermöglicht es, die Reibung zwischen den Düsenhalteeinheiten bzw. mit der Führungsbahn gering zu halten, insbesondere wenn eine an der Übergabeposition positionierte Düsenhalteeinheit um ihre Düsenhalter-Drehachse gedreht wird. Die umlaufende Außenkontur dient einerseits als Kontaktfläche zum schubfesten Abstützen der Düsenhalteeinheit gegen benachbarte Düsenhalteeinheiten und kann andererseits zur seitlichen Führung der Düsenhalteeinheit in der Führungsbahn dienen. Der Düsenhalteeinheit kann auch zwei oder mehr axiale Führungsabschnitte aufweisen, die in Richtung der Zylinderachse bzw. in Höhenrichtung übereinander angeordnet sind und die jeweils eine umlaufende Außenkontur aufweisen, um die Lagerung der Düsenhalteeinheit in der Führungsbahn zu verbessern. Die Außenkontur läuft typischer Weise kreisförmig um eine Düsenhalter-Achse um, die in der Regel entlang der Düsen-Entnahmerichtung verläuft.

Bei einer weiteren Ausführungsform weisen die Düsenhalteeinheiten einen umlaufenden gezahnten Abschnitt auf. Der gezahnte (axiale) Abschnitt der Düsenhalteeinheit steht typischer Weise nicht in radialer Richtung über die kreisförmige Außenkontur (Lagerung) des Führungsabschnitts der Düsenhalteeinheit über bzw. ist gegenüber diesem zurückgesetzt. Der umlaufende gezahnte Abschnitt kann für die Bewegung der Düsenhalteeinheit entlang der Führungsbahn und/oder zur Drehung der jeweiligen Düsenhalteeinheit um ihre Düsenhalter-Achse verwendet werden.

Bei einer Weiterbildung weist der Positionierantrieb zur Bewegung der Düsenhalteeinheit entlang der Führungsbahn einen Zahnriemen zum Eingriff in den umlaufenden gezahnten Abschnitt auf. Für die Bewegung der Düsenhalteeinheit entlang der Führungsbahn ist es ausreichend, wenn der Zahnriemen entlang eines Abschnitts der Führungsbahn in die jeweiligen gezahnten Abschnitte der Düsenhalteeinheit eingreift, d.h. es ist nicht zwingend erforderlich, dass sich der Zahnriemen entlang der gesamten Länge der Führungsbahn erstreckt.

Bei einer Ausführungsform weist der Positionierantrieb zur Bewegung der Düsenhalteeinheit entlang der Führungsbahn eine Zahnstange zum Eingriff in die umlaufenden gezahnten Abschnitte von mindestens zwei benachbarten Düsenhalteeinheiten auf. Die Zahnstange kann an der dem Zahnriemen entgegen gesetzten Seite der Führungsbahn ortsfest angeordnet sein, d.h. diese wird nicht entlang der Führungsbahn bewegt und greift in mindestens zwei gezahnte Abschnitte von benachbarten Düsenhalteeinheiten ein. Bei der Bewegung der Düsenhafteeinheiten entlang der Führungsbahn mit Hilfe des Zahnriemens können diese sich an der Zahnstange abstützen, um den Vortrieb zu erzeugen. Die Zahnstange kann ggf. wahlweise zwischen einer Eingriffsstellung, in der diese seitlich in die Führungsbahn hinein ragt und einer zurückgezogenen Stellung verschoben werden, in der die Zahnstange nicht in den umlaufenden gezahnten Abschnitt der Düsenhalter eingreift, so dass kein Vortrieb erzeugt wird. Dies kann für die Montage/Demontage günstig sein, da in diesem Fall derjenige Düsenhalter, der an der Übergabeposition angeordnet ist, mittels des Zahnriemens um seine Düsenhalter-Achse gedreht werden kann, ohne hierbei entlang der Führungsbahn verschoben zu werden.

Bei einer weiteren Ausführungsform weist der Positionierantrieb eine um eine Drehachse drehbare Antriebsscheibe auf, die zur Bewegung der Düsenhalteeinheit entlang der Führungsbahn zwischen benachbarte Düsenhalteeinheiten eingreift. Für den Eingriff zwischen die Düsenhalteeinheiten sind an der Außenseite der Antriebsscheibe Ausbuchtungen, beispielsweise in Form von Zähnen oder dergleichen gebildet, zwischen denen Einbuchtungen gebildet sind. Die Antriebsscheibe ist hierbei typischer Weise derart ausgebildet bzw. angeordnet, dass die Ausbuchtungen bzw. Zähne zumindest auf der Höhe mindestens eines der Führungsabschnitte verlaufen, an welcher die Düsenhalteeinheit eine umlaufende, drehsymmetrische bzw. kreisförmige Außenkontur aufweisen. Durch die Antriebsscheibe wird die Verschiebung der Düsenhalteeinheit entlang der Führungsbahn mittels des Positionierantriebs vereinfacht. Für die Ausgestaltung des Positionierantriebs bestehen in diesem Fall mehrere Möglichkeiten: Bei einer Ausführungsform weist die Antriebsscheibe eine Mehrzahl von in Umfangsrichtung der Antriebsscheibe voneinander benachbarten Einbuchtungen auf, die jeweils ausgebildet ist, eine der Düsenhalteeinheiten (zwischen benachbarten Ausbuchtungen) aufzunehmen. In diesem Fall dient die Antriebsscheibe zur Vereinzelung der Düsenhalteeinheiten, d.h. die in der Einbuchtung im Wesentlichen vollständig aufgenommene Düsenhalteeinheit steht entlang eines Abschnitts der Führungsbahn, in dem diese eine Drehbewegung um die Drehachse ausführt, nicht mehr mit den benachbarten Düsenhalteeinheiten in Kontakt. Der Positionierantrieb ist in diesem Fall als Schrittantrieb ausgebildet, da die anderen Düsenhalteeinheiten in diesem Zeitraum oder zumindest während eines Teils dieses Zeitraums nicht entlang der Führungsbahn verschoben werden. Sobald die in der Einbuchtung aufgenommene Düsenhalteeinheit diesen Abschnitt verlässt, kommt sie erneut in Kontakt mit einer benachbarten Düsenhalteeinheit und es erfolgt eine Vorschubbewegung der Düsenhalteeinheit, bis eine weitere Düsenhalteeinheit in den Abschnitt geschoben und vereinzelt wird. Die Übergabeposition befindet sich bei dieser Ausführungsform typischer Weise im Bereich des Abschnitts der Führungsbahn, in dem die Vereinzelung erfolgt. Bei dieser Ausführungsform kann die Antriebsscheibe beispielsweise sternförmig oder in der Art eines Malteserkreuzes ausgebildet sein, d.h. die Ausbuchtungen bzw. Zähne der Antriebsscheibe weisen eine erhebliche Erstreckung in Umfangsrichtung auf, beispielsweise über einen Winkel von mehr als ca. 30°. Die Einbuchtungen müssen in Ihrer Geometrie nicht vollständig an die Außenkontur der Führungsabschnitte angepasst sein und können eine z.B. im Wesentlichen dreieckige Grundform aufweisen.

Bei einer alternativen Ausführungsform weist die Antriebsscheibe mehrere in Umfangsrichtung der Antriebsscheibe benachbarte Einbuchtungen auf, die jeweils mit der umlaufenden Außenkontur des bzw. der Führungsabschnitte der Düsenhalteeinheit korrespondieren. Die Einbuchtungen können eine konkav gekrümmte, insbesondere kreisförmige Kontur aufweisen, deren Krümmungsradius mit dem Radius der kreisförmigen Außenkontur der jeweiligen Düsenhalteeinheit übereinstimmt. Weist ein jeweiliger Führungsabschnitt der Düsenhalter eine drehsymmetrische (konvexe) Außenkontur auf, so stimmt dieser mit der Geometrie einer jeweiligen (konkaven) Einbuchtung in der Antriebsscheibe überein. Bei dieser Ausführungsform ist nur ein vergleichsweise kleiner, radial außen liegender Teilbereich einer jeweiligen Düsenhalteeinheit in einer Einbuchtung der Antriebsscheibe angeordnet, so dass die Düsenhalteeinheiten noch miteinander in Kontakt stehen, wenn diese in benachbarten Einbuchtungen des Antriebsrads angeordnet sind. Der Positionierantrieb bildet in diesem Fall einen kontinuierlichen Antrieb, d.h. eine Drehbewegung der Antriebsscheibe führt zu einer kontinuierlichen Verschiebung der Düsenhalteeinheiten entlang der Führungsbahn.

Die Befestigung von Düsen z.B. an einer Düsenhalteeinrichtung an einem Bearbeitungskopf einer Laserbearbeitungsmaschine kann durch eine Schraubverbindung (Schraubdüse) oder durch eine Steckverbindung (Steckdüse bzw. Steckdüsenhalter) erfolgen. Wird die Düse über eine Steckverbindung an der Düsenhalteeinrichtung z.B. eines Bearbeitungskopfs befestigt, kann bei dem Düsenwechsler auf einen Dreh-Antrieb zum Anschrauben einer jeweiligen Düse an dem Bearbeitungskopf verzichtet werden. In diesem Fall weist die Düsenhalteeinrichtung am Bearbeitungskopf eine geeignete Kupplungseinrichtung zur Befestigung bzw. zum Anstecken der Düse auf.

Bei einer weiteren Ausführungsform umfasst der Düsenwechsler zusätzlich einen Montage/Demontage-Antrieb, der ausgebildet ist, eine an der Übergabeposition angeordnete Düsenhalteeinheit um eine Düsenhalter-Achse zu drehen. Wie weiter oben beschrieben wurde, dient der Drehantrieb dazu, eine Schraubdüse an der Düsenhalteeinrichtung zu befestigen bzw. die Düse von dieser zu lösen. Der Montage/Demontage-Antrieb kann beispielsweise an der an der Übergabeposition angeordneten Düsenhalteeinheit von der Unterseite angreifen, beispielsweise indem dieser in eine an der Unterseite der Düsenhalteeinheit gebildete Nut eingreift. Steht die Düsenhalteeinheit in der Übergabeposition an der kreisförmigen Außenkontur eines jeweiligen Führungsabschnitts mit benachbarten Düsenhalteeinheiten in Kontakt, kann diese bei der Drehbewegung an den kreisförmigen Außenkonturen der benachbarten Düsenhalteeinheit entlang gleiten, so dass diese nicht um ihre jeweilige Düsenhalter-Achse mitgedreht werden. Ist die kreisförmige Außenkontur des Führungsabschnitts an einem Außenring eines Kugellagers gebildet, steht bei der Drehbewegung der Düsenhalteeinheit der Außenring fest und es dreht sich nur der an dem Grundkörper der Düsenhalteeinheit angebrachte Innenring um die Düsenhalter-Drehachse. Es ist aber auch möglich, dass zur Übergabeposition benachbart angeordnete Düsenhalteeinheiten ebenfalls um ihre jeweilige Düsenhalter-Achse gedreht werden. Der Montage/Demontage-Antrieb greift typischer Weise an dem gezahnten Abschnitt des Düsenhalters an.

Bei einer Weiterbildung weist der Montage/Demontage-Antrieb zur Drehung der Düsenhalteeinrichtung um ihre Düsenhalter-Achse ein Zahnrad auf, das in einen gezahnten Abschnitt mindestens eines Düsenhalters eingreift. Der gezahnte (axiale) Abschnitt der Düsenhalteeinheit steht typischer Weise nicht in radialer Richtung über die kreisförmige Außenkontur des bzw. der Führungsabschnitte der Düsenhalteeinheit vor bzw. ist gegenüber diesem zurückgesetzt. Es versteht sich, dass der Montage/Demontage-Antrieb für den Eingriff in den gezahnten Abschnitt beispielsweise einen Zahnriemen oder dergleichen aufweisen kann. Beispielsweise kann der Zahnriemen des Positionierantriebs, der weiter oben beschrieben wurde, auch für den Montage/Demontage-Antrieb verwendet werden.

Bei einer weiteren Weiterbildung umfasst der Düsenwechsler einen gemeinsamen, typischer Weise elektrischen Antriebsmotor für den Positionierantrieb und den Montage/Demontage-Antrieb. Bei dieser Ausführungsform kann der Antriebsmotor wahlweise den Positionierantrieb oder den Montage/Demontage-Antrieb oder ggf. beide Antriebe gleichzeitig aktivieren, um die Düsenhalter entlang der in sich geschlossenen Führungsbahn zu verschieben und/oder um den in der Übergabeposition angeordneten Düsenhalteeinheit (sowie ggf. weitere Düsenhalteeinheiten) um ihre jeweilige Düsenhalter-Achse zu drehen. Der Antriebsmotor kann beispielsweise ausgebildet sein, den weiter oben beschriebenen Zahnriemen entlang der Führungsbahn zu bewegen. Greift die weiter oben beschriebene Zahnstange in die gezahnten Abschnitte der Düsenhalteeinheit ein, bewirkt die Bewegung des Zahnriemens einen Vorschub der Düsenhalteeinheit entlang der Führungsbahn. Wird die Zahnstange aus der Führungsbahn heraus bewegt, wird mittels des Antriebsmotors der an der Übergabeposition angeordnete Düsenhalteeinheit um ihre Düsenhalter-Achse gedreht, sofern dieser durch eine Arretierung an einer Bewegung entlang der Führungsbahn gehindert ist.

Bei einer weiteren Weiterbildung umfasst der Düsenwechsler eine schaltbare Kupplung mit einem Kupplungselement zum Herstellen einer Antriebsverbindung zwischen dem Antriebsmotor und dem Positionierantrieb in einer ersten Stellung des Kupplungselements und zum Herstellen einer Antriebsverbindung zwischen dem Antriebsmotor und dem Montage/Demontage-Antrieb in einer zweiten Stellung des Kupplungselements. Typischer Weise besteht in der ersten Stellung des Kupplungselements keine Antriebsverbindung zwischen dem Antriebsmotor und dem Montage/Demontage-Antrieb. Entsprechend besteht in der zweiten Stellung des Kupplungselements keine Antriebsverbindung zwischen dem Antriebsmotor und dem Positionierantrieb. Es ist aber auch möglich, dass in der ersten Stellung des Kupplungselements eine Antriebsverbindung zwischen dem Antriebsmotor und dem Montage/Demontage-Antrieb erhalten bleibt, so dass der Montage/Demontage-Antrieb unabhängig davon, ob das Kupplungselement sich in der ersten oder der zweiten Stellung befindet, stets in Antriebsverbindung mit dem gemeinsamen Antriebsmotor steht. Die schaltbare Kupplung kann beispielsweise ein Kupplungselement in Form einer Kupplungsscheibe oder dergleichen aufweisen, welche mittels einer Schalteinrichtung zwischen zwei unterschiedlichen Positionen hin- und her bewegbar ist, um die Antriebsverbindung mit dem Positionierantrieb oder mit dem Montage/Demontage-Antrieb herzustellen.

Bei einer Weiterbildung stimmen die Drehachse der Antriebsscheibe des Positionierantriebs und die Drehachse des Zahnrads des Montage/Demontage-Antriebs überein. Die Antriebsscheibe und das Zahnrad sind in diesem Fall konzentrisch übereinander angeordnet, wobei typischer Weise das Zahnrad des Montage/Demontage-Antriebs eine geringere radiale Erstreckung von der gemeinsamen Drehachse aufweist als die Antriebsscheibe des Positionierantriebs.

Die Zähne des Zahnrads des Montage/Demontage-Antriebs ragen typischer Weise in die Einbuchtungen der Antriebsscheibe des Positionierantriebs hinein, um mit einem gezahnten Abschnitt einer jeweiligen Düsenhalteeinheit in Eingriff zu kommen.

Bei einer weiteren Ausführungsform umfasst der Düsenwechsler zusätzlich eine schaltbare Arretierungseinrichtung zur Arretierung der an der Übergabeposition positionierten Düsenhalteeinheit gegen eine Bewegung entlang der Führungsbahn. Die Arretierungseinrichtung kann einen Arretierungsantrieb aufweisen, mit dem ein Arretierungselement, beispielsweise in Form eines klammerförmigen Bauteils oder in Form eines oder mehrerer Indexierbolzen, in eine Arretierungsstellung bewegt wird, in welcher der Vorschub der Düsenhalteeinheit durch den Positionierantrieb gesperrt wird. Für die Arretierung kann beispielsweise die Verbindung zwischen dem Antriebsmotor und der Antriebsscheibe getrennt werden. Alternativ oder zusätzlich kann die an der Übergabeposition angeordnete Düsenhalteeinheit an der Übergabeposition fixiert, d.h. an der Bewegung entlang der Führungsbahn gehindert werden. Als Arretierungsantrieb kann beispielsweise ein pneumatischer oder hydraulischer Antrieb dienen. Die Arretierungseinrichtung wird typischer Weise numerisch gesteuert betätigt. Das Arretierungselement der Arretierungseinrichtung kann auch mit dem Kupplungselement und/oder mit einem Schaltelement der schaltbaren Kupplung antriebsverbunden sein. Auf diese Weise kann die Arretierung durch das Arretierungselement zeitlich parallel zur Bewegung des Kupplungselements in die zweite Stellung erfolgen, so dass die Arretierung abgeschlossen ist, wenn das Kupplungselement sich in der zweiten Stellung befindet.

Bei einer weiteren Ausführungsform ist die Führungsbahn durch zwei parallel verlaufende seitliche Ränder begrenzt. Die Düsenhalteeinheit, genauer gesagt die Führungsabschnitte, weisen eine Breite bzw. einen Außendurchmesser auf, der es ermöglicht, die Düsenhalteeinheit mit geringem Spiel zwischen den beiden Rändern entlang der Führungsbahn zu führen. Gemäß der Erfindung weist mindestens eine Düsenhalteeinheit, insbesondere weisen alle Düsenhalteeinheiten jeweils eine Düsenaufnahme (auch als Düsenhalter oder Düsenablage bezeichnet) zur Ablage mindestens einer Düse auf. Die Düsenhalteeinheiten haben in der Regel einen hülsenförmigen Grundkörper, in dem eine Düsenaufnahme aufgenommen ist bzw. aufgenommen werden kann. Die Düsenaufnahme kann in dem Grundkörper insbesondere in Richtung der Drehachse federnd gelagert sein. Zudem kann ein radiales Spiel zwischen der Düsenaufnahme und dem Grundkörper der Düsenhalteeinheit bestehen, wie dies in der EP 2 589 458 B1 beschrieben ist. Es versteht sich, dass die Düsenaufnahme sich in radialer Richtung nicht weiter nach außen erstreckt als der Grundkörper der Düsenhalteeinheit, an welcher der bzw. die Führungsabschnitte gebildet sind, die als Kontaktflächen zu benachbarten Düsenhalteeinheiten dienen. In der Düsenaufnahme ist ein Düsenlagerraum gebildet, der sich typischer Weise zu einer oberen Öffnung hin erweitert und in dem einer oder ggf. mehrere Düsenlagerplätze zur Ablage von Düsen mit unterschiedlicher Geometrie und/oder Größe gebildet sind. Die Düsenlagerplätze können insbesondere stufenförmig voneinander abgesetzt sein, wie dies im Detail in der EP 2 589 458 B1 beschrieben ist. In dem Düsenlagerraurm bzw. an einem Düsenlagerplatz können umlaufende Aufnahmekonturen gebildet sein, welche eine formschlüssige und somit verdrehsichere Ablage einer Düse ermöglichen. Einer oder mehrere der Düsenlagerplätze können auch zur Aufnahme von steckbaren Düsen ausgebildet sein und ggf. selbst eine Klemm- und/oder Rasteinrichtung aufweisen.

In den Düsenhalteeinheiten des Düsenwechslers können unterschiedliche Typen von Düsenaufnahmen vorgesehen sein. Insbesondere kann in einer der Düsenhalteeinheiten eine Blindstation vorgesehen sein, die während der Werkstückbearbeitung an der Übergabeposition positioniert wird, um Schmutzpartikel aufzufangen, die ansonsten in den Düsenlagerraum einer dort positionierten Düsenaufnahme gelangen könnten. Um den Düsenwechsel zu vereinfachen, ist es vorteilhaft, wenn alle Düsenaufnahmen, die in dem Düsenwechsler verwendet werden, eine identische Bauform aufweisen. Dies ist aber nicht zwingend erforderlich da über eine geeignete Steuerung auch unterschiedliche Arten von Düsenaufnahmen verwaltet werden können.

Bei einer weiteren Ausführungsform umfasst der Düsenwechsler zusätzlich mindestens eine Transporteinrichtung zum Transport einer an einer Warteposition außerhalb der Führungsbahn angeordneten Düsenhalteeinheit an eine Wechselposition entlang der Führungsbahn. Beim Düsenwechsel ist es erforderlich, die gerüstete, an der Düsenhalteeinrichtung befestigte Düse von der Düsenhalteeinrichtung zu lösen und in einer leeren Düsenaufnahme abzulegen, die an der Übergabeposition angeordnet wird. Nachfolgend muss die Düsenhalteeinheit mit derjenigen Düse, die an der Düsenhalteeinrichtung befestigt werden soll, an die Übergabeposition bewegt werden. Um den Verfahrweg zwischen der Düsenhalteeinheit mit der leeren Düsenaufnahme und der Düsenhalteeinheit mit der zu rüstenden Düse möglichst gering zu halten und somit die Rüstzeit zu minimieren, kann zunächst die Düsenhalteeinheit, in deren Düsenaufnahme die zu rüstende Düse aufgenommen ist, mittels des Positionierantriebs in die Nähe, typischer Weise unmittelbar benachbart zur Wechselposition angeordnet werden. Ist an dem Warteplatz eine Düsenhalteeinheit mit einer leeren Düsenaufnahme positioniert, kann diese mittels der Transporteinrichtung an die Wechselposition bewegt werden, so dass die Düsenhalteeinheit mit der leeren Düsenaufnahme und die Düsenhalteeinrichtung mit der zu rüstenden Düse unmittelbar benachbart entlang der Führungsbahn angeordnet sind. Es versteht sich, dass während des Transports der Düsenhalteeinheit der Positionierantrieb typischer Weise nicht aktiv ist. Es versteht sich auch, dass ggf. zwei oder mehr Transporteinrichtungen mit zwei oder mehr zugehörigen Wechselpositionen in dem Düsenwechsler vorgesehen sein können. Es können auch Transporteinrichtungen mit zwei oder mehr Wartepositionen außerhalb der Führungsbahn vorgesehen sein, um dort befindliche Düsenhalteeinheiten wahlweise an ein- und dieselbe Wechselposition zu transportieren. Eine Transporteinrichtung weist typischer Weise eine schubladenartige Düsenhalteeinheits-Aufnahme auf, an der zwei oder mehr Aufnahmeräume für jeweils eine Düsenhalteeinheit gebildet sind. Die Aufnahmeräume können jeweils benachbart voneinander z.B. in einer Linie angeordnet sein. Ein einzelner Ablageraum ist wie ein Abschnitt der Führungsbahn ausgebildet, d.h. der Ablageraum weist zwei seitliche Ränder auf, zwischen denen genau eine Düsenhalteeinheit positioniert werden kann und die seitlichen Ränder des Ablageraums korrespondieren mit den Rändern der Führungsbahn außerhalb der Wechselposition.

Bei einer Weiterbildung ist die Transporteinrichtung ausgebildet, vor oder während des Transports der Düsenhalteeinheit von der Warteposition in die Wechselposition eine an der Wechselposition angeordnete Düsenhalteeinheit in eine Ausschleusposition außerhalb der Führungsbahn zu transportieren. Es versteht sich, dass eine an der Wechselposition angeordnete Düsenhalteeinheit vor oder während des Bewegens der Düsenhalteeinheit aus der Warteposition in die Wechselposition aus der Führungsbahn bzw. von der Wechselposition entfernt werden muss. Die Transporteinrichtung kann beispielsweise einen Antriebsmotor aufweisen, der einen an der Warteposition angeordneten Ablageraum, in dem eine Düsenhalteeinheit angeordnet ist, seitlich in die Führungsbahn verschiebt, wobei gleichzeitig ein weiterer, benachbart angeordneter Ablageraum zusammen mit einer dort abgelegten Düsenhalteeinheit an die Ausschleusposition bewegt wird. Sind mehrere Wartepositionen außerhalb der Führungsbahn gebildet, sind in diesem Beispiel mehrere Ablageräume einer oder ggf. mehrerer Düsenhalteeinheits-Aufnahmen seitlich nebeneinander angeordnet und können wahlweise seitlich in die Führungsbahn, genauer gesagt an die Wechselposition, verschoben werden. Weist eine Transporteinrichtung zwei oder mehr Wartepositionen auf, ist typischer Weise eine geregelte Antriebsachse erforderlich, um wahlweise einen jeweiligen Ablageraum von der Warteposition an die Wechselposition zu transportieren. Alternativ oder zusätzlich zu einer seitlichen Bewegung ist es auch möglich, eine jeweilige Düsenhalteeinheit bzw. einen Ablageraum, der an der Wechselposition angeordnet ist, in vertikaler Richtung zu bewegen. In beiden Fällen kann der Düsenwechsler ein weiteres Düsenmagazin aufweisen, das insbesondere wie weiter oben beschrieben ausgebildet ist, d.h. das ebenfalls eine geschlossene Führungsbahn aufweist. Für die Bewegung der Düsenhalteeinheiten des weiteren Düsenmagazins kann derselbe Positionierantrieb und ggf. derselbe Antriebsmotor verwendet werden wie für das Düsenmagazin, insbesondere, wenn eine geeignete Kupplung vorgesehen wird. Beispielsweise können in diesem Fall zwei oder ggf. mehrere Düsenmagazine übereinander angeordnet werden.

Bei geeigneter Auslegung des Düsenwechslers sowie bei geeigneter Positionierung des Düsenwechslers in einer Laserbearbeitungsmaschine kann die Düsenhalteeinheit, welche in die Ausschleusposition bewegt wurde, auch für das hauptzeitparallele Rüsten genutzt werden, beispielsweise wenn der Ablageraum mit der Düsenhalteeinheit aus einer Seiten- oder Frontwand der Verkleidung der Laserbearbeitungsmaschine ausgefahren bzw. herausgeschoben wird, so dass von außen auf die in der Düsenhalteeinheit bzw. der Düsenaufnahme gelagerte Düse zugegriffen werden kann.

Die Erfindung betrifft auch eine Laserbearbeitungsmaschine zum Bearbeiten von Werkstücken, umfassend: eine Düsenhalteeinrichtung zur Befestigung einer Düse, die bevorzugt an einem Bearbeitungskopf gebildet ist, sowie einen Düsenwechsler wie weiter oben beschrieben zur Montage und/oder zur Demontage einer Düse an der Düsenhalteeinrichtung. Die Düsenhalteeinrichtung kann ein Gewinde aufweisen, um die Düse an dem Bearbeitungskopf zu befestigen, es ist aber auch möglich, dass die Düsenhalteeinrichtung eine Rast- und/oder Klemmeinrichtung zur rastenden bzw. klemmenden Befestigung einer Düse aufweist. Die Düsenhalteeinrichtung ist typischer Weise am Bearbeitungskopf der Laserbearbeitungsmaschine, beispielsweise einer 2D-Laserschneidmaschine oder einer 3D-Laserbearbeitungsmaschine angebracht. Der Bearbeitungskopf ist typischer Weise entlang von drei Raumrichtungen bewegbar, so dass dieser an der Übergabeposition positioniert und zur Montage/Demontage einer Düse entlang der Düsen-Entnahmerichtung (typischer Weise Z-Richtung bzw. Schwerkraftrichtung) bewegt werden kann. Der Bearbeitungskopf kann insbesondere an einem Bearbeitungsroboter angebracht sein. Der Düsenwechsler ist typischer Weise am Rand eines Bearbeitungsraums bzw. Bearbeitungsbereichs der Laserbearbeitungsmaschine angeordnet oder kann mittels einer Transporteinrichtung, beispielsweise mittels eines schwenkbaren Arms oder einer Linearachse, am Rand des Bearbeitungsraums positioniert werden.

Weitere Vorteile der Erfindung ergeben sich aus der Beschreibung und den Zeichnungen. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein erstes Ausführungsbeispiel eines Düsenwechslers mit einer in sich geschlossenen Führungsbahn und mit einem Positionierantrieb, der einen Zahnriemen aufweist, in einer perspektivischen Ansicht,
- Fig. 2: eine perspektivische Ansicht von mehreren Düsenhalteeinheiten, die entlang der Führungsbahn angeordnet sind,
- Fig. 3: eine Draufsicht auf mehrere Düsenhalteeinheiten, die entlang der Führungsbahn eine durchgehende Schubgliederkette bilden,
- Fig. 4: ein zweites Ausführungsbeispiel eines Düsenwechslers mit einem Positionierantrieb, der eine Antriebsscheibe aufweist, in einer perspektivischen Ansicht,
- Fig. 5: eine teilweise freigeschnittene Ansicht des Düsenwechslers von Fig. 4,
- Fig. 6: eine perspektivische Schnittansicht mit einer schaltbaren Kupplung für den Düsenwechsler von Fig. 4 und Fig. 5,
- Fig. 7: ein drittes Ausführungsbeispiel eines Düsenwechslers, welches zwei Transporteinrichtungen zum Transport jeweils einer Düsenhalteeinheit von einer Warteposition außerhalb der Führungsbahn an eine Wechselposition in der Führungsbahn aufweist,
- Fig. 8: eine Darstellung analog Fig. 7 mit einer Düsenhalteeinheit an einer Ausschleusposition außerhalb der Führungsbahn,
- Fig. 9: eine Darstellung eines Details des Düsenwechslers von Fig. 7 und Fig. 8 mit einer Antriebsscheibe, die zur Vereinzelung einer Düsenhalteeinheit an einer Übergabeposition ausgebildet ist, sowie
- Fig. 10: eine Darstellung einer Laserbearbeitungsmaschine mit einem Bearbeitungskopf und mit einem Düsenwechsler.

In der nachfolgenden Beschreibung der Zeichnungen werden für gleiche bzw. funktionsgleiche Bauteile gleiche Bezugszeichen verwendet.

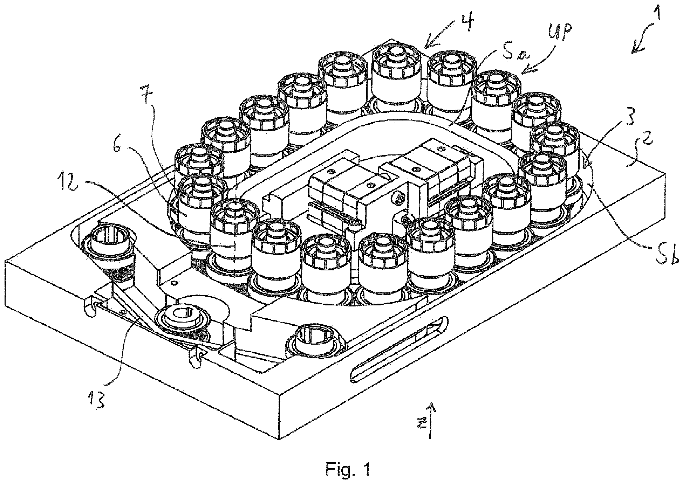

**Fig. 1** zeigt einen Düsenwechsler 1, der ein nach oben offenes, kastenförmiges Düsenmagazin 2 mit einer Mehrzahl von Düsenhalteeinheiten 4 (im gezeigten Beispiel mit neunzehn Düsenhalteeinheiten 4) aufweist. Die Düsenhalteeinheiten 4 sind entlang einer in sich geschlossenen (endlosen) Führungsbahn 3 angeordnet, die in dem Düsenmagazin 2 gebildet ist und die durch den Boden des Düsenmagazins 2 sowie durch einen inneren seitlichen Rand 5a und durch einen parallel verlaufenden äußeren seitlichen Rand 5b des Düsenmagazins 2 begrenzt ist, so dass die Führungsbahn 3 eine konstante Breite aufweist. Die Düsenhalteeinheiten 4 weisen einen planen Boden auf, mit dem sie an dem Boden des Düsenmagazins 2 bzw. der Führungsbahn 3 entlang gleiten.

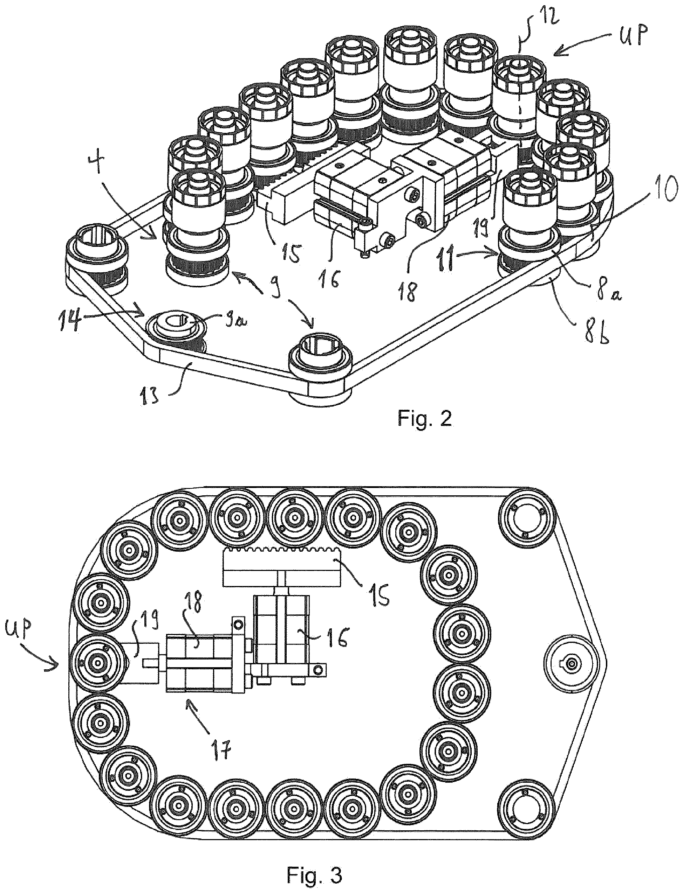

Die Düsenhalteeinheiten 4 weisen jeweils einen oberen und einen unteren Führungsabschnitt 8a, 8b (vgl. **Fig. 2**) auf, die in Form von metallischen Ringen ausgebildet sind, die über ein jeweiliges Kugellager bzw. einen Innenring des Kugellagers an einem hülsenförmigen Grundkörper 9 der Düsenhalteeinheit 4 gelagert sind. Die beiden Führungsabschnitte 8a, 8b weisen jeweils eine kreisförmige Außenkontur 10 auf, die eine jeweilige Düsenhalteeinheit 4 radial nach außen begrenzt. Die kreisförmige Außenkontur 10 der Führungsabschnitte 8a, 8b der Düsenhalteeinheit 4 dient einerseits zur Führung der Düsenhalteeinheit 4 entlang der in sich geschlossenen Führungsbahn 3 und andererseits als Kontaktfläche zwischen benachbarten Düsenhalteeinheiten 4. Die beiden seitlichen Ränder 5a, 5b der Führungsbahn 3 erstrecken sich in vertikaler Richtung Z über eine Höhe, die so groß ist, dass die beiden axialen Führungsabschnitte 8a, 8b an diesen anliegen. Die vertikale Richtung Z entspricht im gezeigten Beispiel einer Düsen-Entnahmerichtung, entlang derer die in einer jeweiligen Düsenaufnahme 6 einer Düsenhalteeinrichtung 4 gelagerte Düse 7 aus der Düsenaufnahme 6 bzw. aus dem Düsenwechsler 1 entnommen werden kann. Die Düsenaufnahme 6 ist in dem hülsenförmigen Grundkörper 9 der Düsenhalteeinheit 4 gelagert und kann ggf. mittels geeigneter Arretierungsmittel gegen ein unerwünschtes Lösen von der Düsenhalteeinheit 4 bei der Entnahme der Düse 7 gesichert sein.

Zwischen dem oberen Führungsabschnitt 8a und dem unteren Führungsabschnitt 8b ist an dem hülsenförmigen Grundkörper 9 einer jeweiligen Düsenhalteeinheit 4 ein umlaufender gezahnter Abschnitt 11 gebildet, der sich in radialer Richtung, die von einer Düsenhalter-Achse 12 (Mittenachse) ausgeht, weniger weit nach außen erstreckt wie die Führungsabschnitte 8a, 8b. Die Zähne des umlaufenden gezahnten Abschnitts 11 sind somit gegenüber der Außenkontur 10 der Führungsabschnitte 8a, 8b in radialer Richtung zurückgesetzt.

Wie in Fig. 1 und insbesondere in Fig. 2 zu erkennen ist, greift für die Bewegung der Düsenhalteeinheiten 4 entlang der Führungsbahn 3 ein Zahnriemen 13 seitlich in den gezahnten Abschnitt 11 der Düsenhalteeinrichtung 4 ein. Der Zahnriemen 13 wird von einem nicht bildlich dargestellten Antriebsmotor angetrieben, dessen Antriebswelle in das Innere eines geeignet angepassten, in **Fig. 2** gezeigten Antriebsritzels bzw. Antriebsrads 9a eingreift, das außerhalb der Führungsbahn 3 angeordnet ist. Der (nicht gezeigte) Antriebsmotor, das Antriebsritzel 9a und der Zahnriemen 13 bilden gemeinsam einen Positionierantrieb 14. Wie in Fig. 3 zu erkennen ist, greift der Zahnriemen 13 seitlich nicht an den gezahnten Abschnitten 11 aller Düsenhalteeinheiten 4, sondern nur an einem Teil der Düsenhalteeinheiten 4 an, die entlang der Führungsbahn 3 angeordnet sind. Der Zahnriemen 13 verläuft hierbei entlang der Innenseite des äußeren Randes 5b der Führungsbahn 3 auf Höhe der gezahnten Abschnitte 11 der Düsenhalteeinheiten 4.

Wie in Fig. 2 und Fig. 3 ebenfalls zu erkennen ist, ist in dem Düsenmagazin 2 eine Zahnstange 15 angebracht, die mittels eines pneumatischen Antriebs 16 von einer in Fig. 3 gezeigten, zurückgezogenen Stellung seitlich durch eine Öffnung in dem inneren Rand 5a der Führungsbahn 3 in eine in Fig. 2 gezeigte Eingriffsstellung verschoben werden kann, in welcher die Zähne der Zahnstange 15 seitlich in die Führungsbahn 3 hinein ragen und in die gezahnten Abschnitte 11 von zwei benachbart angeordneten Düsenhalteeinheiten 4 eingreifen.

Befindet sich die Zahnstange 15 in der Eingriffsstellung, können sich die beiden Düsenhalteeinheiten 4, in deren gezahnte Abschnitte 11 die Zahnstange 15 eingreift, an der Zahnstange 15 abstützen, um bei aktiviertem Positionierantrieb über das Antriebsritzel 9a einen Vortrieb der Düsenhalteeinheiten 4 entlang der in sich geschlossenen Führungsbahn 3 zu erzeugen. Hierbei wird ausgenutzt, dass die Düsenhalteeinheiten 4 entlang der Führungsbahn 3 eine Schubgliederkette bilden, so dass die Verschiebung einer der Düsenhalteeinheit 4 entlang der Führungsbahn 3 die Verschiebung aller anderen Düsenhalteeinheiten 4 entlang der Führungsbahn 3 zur Folge hat. Zur Bildung der Schubgliederkette liegen jeweils benachbarte Düsenhalteeinheiten 4, die in der Führungsbahn 3 angeordnet sind, mit den kreisförmigen Außenkonturen 10 ihrer Führungsabschnitte 8a, 8b schubfest aneinander an, so dass diese wie die Glieder einer herkömmlichen Kette bewegt werden können, ohne dauerhaft miteinander verbunden zu sein. Mit Hilfe des Positionierantriebs können über das Antriebsritzel 9a bzw. über den Positionierantrieb 14 die Düsenhalteeinheiten 4 daher in einem geschlossenen Kreislauf entlang der Führungsbahn 3 bewegt werden, so dass jede der Düsenhalteeinheit 4 an eine gewünschte Position entlang der Führungsbahn 3 verbracht werden kann.

Ist eine für die Montage oder Demontage einer Düse 7 vorgesehene Düsenhalteeinheit 4 wie in Fig. 3 gezeigt mit Hilfe des Positionierantriebs 14 über das Antriebsritzel 9a bzw. den Zahnriemen 13 an einer Übergabeposition UP entlang der Führungsbahn 3 gemäß der Erfindung positioniert, wird zunächst die Zahnstange 15 mittels des pneumatischen Antriebs 16 aus der in Fig. 2 gezeigten Eingriffsstellung in eine in Fig. 3 gezeigte zurückgezogene Stellung verschoben, bei welcher die Zahnstange 16 nicht in die gezahnten Abschnitte 11 der Düsenhalteeinheit 4 eingreift. Für die Montage einer Düse 7 einer an der Übergabeposition UP angeordneten Düsenhalteeinheit 4 an einer (nicht gezeigten) Düsenhalteeinrichtung mittels einer Schraubverbindung wird die Düsenhalteeinheit 4 zunächst mit Hilfe einer schaltbaren Arretierungseinrichtung 17 an der Übergabeposition UP fixiert, d.h. die Bewegung der Düsenhalteeinheit 4 bzw. aller Düsenhalteeinheiten 4 entlang der Führungsbahn 3 wird unterbunden. Im gezeigten Beispiel weist die Arretierungseinrichtung 17 zu diesem Zweck einen pneumatischen Arretierungsantrieb 18 auf, der ein Arretierungselement 19 aus einer zurückgezogenen Stellung durch eine Öffnung in dem inneren Rand 5a der Führungsbahn 3 hindurch in eine in Fig. 3 gezeigte Arretierungsstellung bewegt. Das Arretierungselement 19 ist im gezeigten Beispiel im Wesentlichen C-förmig ausgebildet und liegt in der Arretierungsstellung mit seinen beiden Schenkeln an der an der Übergabeposition UP angeordneten Düsenhalteeinheit 4, genauer gesagt an deren beiden Führungsabschnitten 8a, 8b an. Das Arretierungselement 19 verhindert zwar eine Bewegung der Düsenhalteeinheit 4 entlang der Führungsbahn 3, ermöglicht aber eine Drehbewegung der Düsenhalteeinheit 4 um ihre Düsenhalter-Achse 12, da die kreisförmige Außenkontur 10 der Führungsabschnitte 8a, 8b an der Anlagefläche des C-förmigen Arretierungselements 19 entlang gleiten kann bzw. die Führungsabschnitte 8a, 8b z.B. als Kugellager ausgebildet sind.

Für den Düsenwechsel, genauer gesagt für das Anschrauben der Düse 7 an einer Düsenhalteeinrichtung, wird der an der Übergabeposition UP angeordnete und mittels des Arretierungselements 19 an der Bewegung entlang der Führungsbahn 3 gehinderte Düsenhalteeinheit 4 somit mit Hilfe des Positionierantriebs über das Antriebsrad 14 in eine Drehbewegung um ihre Düsenhalter-Achse 12 versetzt. Der Positionierantrieb 14 dient in diesem Fall, d.h. bei an der Übergabeposition UP arretierter Düsenhalteeinheit 4, als Montage/Demontage-Antrieb zur Montage der Düse 7 an der Düsenhalteeinrichtung. Es versteht sich, dass für die Demontage einer Düse 7 von der Düsenhalteeinrichtung der Positionierantrieb 14 mit einer umgekehrten Drehrichtung betrieben werden muss.

Der in Fig. 1 bis Fig. 3 gezeigte Düsenwechsler 1 ermöglicht durch die Anordnung der Düsenhalteeinheiten 4 in einer Reihe entlang der Führungsbahn 3 eine besonders platzsparende Lagerung der Düsenhalteeinheiten 4. Der Düsenwechsler 1 ist besonders einfach aufgebaut und benötigt für das Umschalten zwischen dem Positionieren und der Montage/Demontage einer Düse 7 keine Kupplung. Der dort gezeigte Düsenwechsler 1 ist allerdings nicht ohne weiteres skalierbar, d.h. dieser kann nicht ohne weiteres für die Lagerung von mehr oder weniger Düsen ausgelegt werden, da zu diesem Zweck die Länge des Zahnriemens 13 verändert werden muss. Auch kann der Antriebsmotor für den Positionierantrieb 14 (siehe Antriebsritzel/-rad 9a) ggf. nicht innerhalb des von dem inneren Rand 5a der Führungsbahn 3 begrenzten inneren Bereich des Düsenmagazins 2 angeordnet werden, da dort bereits die beiden pneumatischen Antriebe 16, 18 angeordnet sind.

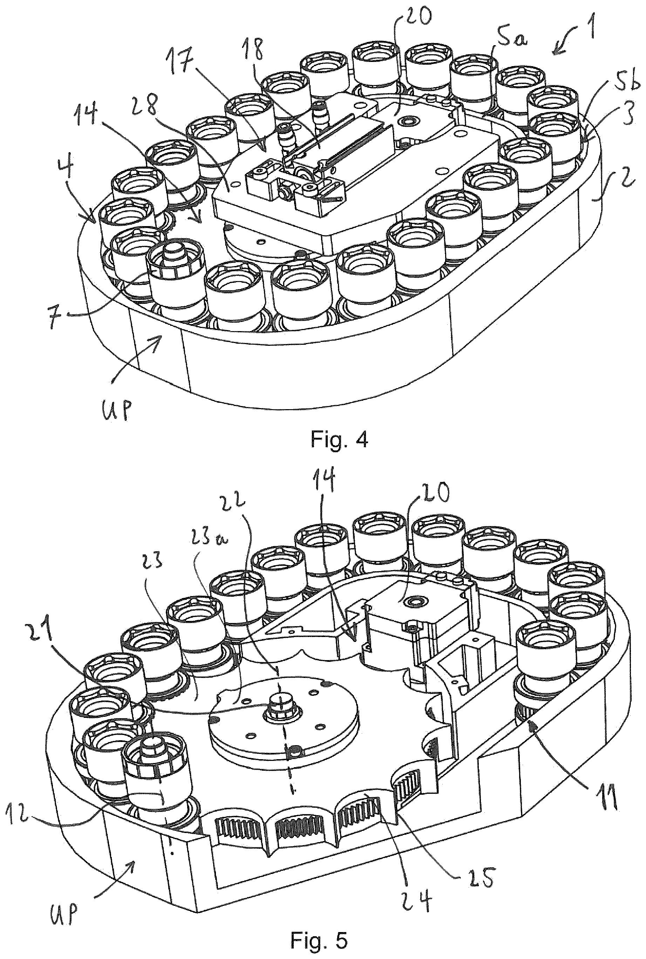

**Fig. 4** bis **Fig. 6** zeigen einen Düsenwechsler 1, bei dem der Antriebsmotor 20 des Positionierantriebs 14 in einem Bereich des Düsenmagazins 2 innerhalb des inneren Randes 5a der Führungsbahn 3 angeordnet ist. Der Antriebsmotor 20 weist ein drehfest mit einer Antriebswelle verbundenes (nicht gezeigtes) Zahnrad auf, das an der Unterseite des Düsenmagazins 2 angebracht ist und das mit einem weiteren an der Unterseite des Düsenmagazins 2 angeordneten (nicht gezeigten) Zahnrad verkämmt, um eine Antriebswelle 21 des Positionierantriebs 14 um eine in Düsen-Entnahmerichtung Z verlaufende Drehachse 22 zu drehen. Es versteht sich, dass die Kraftübertragung von dem Antriebsmotor 20 auf die Antriebswelle 21 auch auf andere Weise, beispielsweise über einen Zahnriemen oder dergleichen, erfolgen kann.

Der Positionierantrieb 14 des Düsenwechslers 1 weist für die Bewegung bzw. den Vorschub der Düsenhalteeinheiten 4 entlang der Führungsbahn 3 eine Antriebsscheibe 23 auf, die mittels des Antriebsmotors 20 um die Drehachse 22 gedreht werden kann. Die Antriebsscheibe 23 ist ausgebildet, für den Vorschub der Düsenhalteeinheiten 4 entlang der Führungsbahn 3 zwischen benachbarte Düsenhalteeinheiten 4 einzugreifen, so dass diese bei der Drehung der Antriebsscheibe 23 von dieser mitgenommen und entlang der Führungsbahn 3 verschoben werden. Zu diesem Zweck weist die Antriebsscheibe 23 eine in der Art eines Zahnrades ausgebildete Außenkontur auf. Die Außenkontur weist konkave Einbuchtungen 24 auf, die mit der kreisförmigen umlaufenden Außenkontur 10 der Führungsabschnitte 8a, 8b einer jeweiligen Düsenhalteeinheit 4 korrespondieren, d.h. die denselben Krümmungsradius wie die umlaufende Außenkontur 10 der Führungsabschnitte 8a, 8b aufweisen. An der Außenkontur der Antriebsscheibe 23 sind zwischen den Einbuchtungen 24 Zähne 25 gebildet, die jeweils zwischen benachbarte Düsenhalteeinheiten 4 eingreifen. Die von der Antriebsscheibe 23 bei der Drehbewegung mitgenommenen Düsenhalteeinheiten 4 berühren sich an ihren Führungsabschnitten 8a, 8b, d.h. diese werden bei der Drehung um die Drehachse 22 nicht vereinzelt, so dass der Positionierantrieb 14 eine kontinuierliche Bewegung der Düsenhalteeinheiten 4 entlang der Führungsbahn 3 bewirkt.

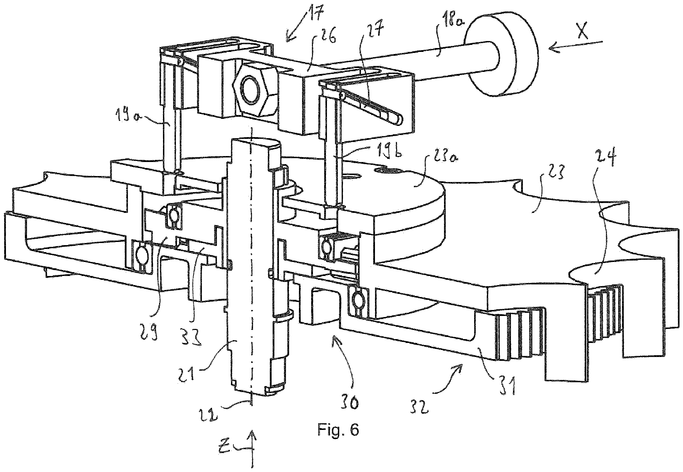

Bei dem in Fig. 4 bis Fig. 6 gezeigten Düsenwechsler 1 ist ebenfalls eine Übergabeposition UP gebildet, und zwar an der kürzeren Seite des kastenförmigen Düsenmagazins 2 in einem Abschnitt entlang der Führungsbahn 3 (gemäß der Erfindung), in dem die Antriebsscheibe 23 in die Führungsbahn 3 eingreift. Der Düsenwechsler 1 weist auch in diesem Beispiel eine Arretierungseinrichtung 17 auf, um eine Düsenhalteeinheit 4 an der Übergabeposition UP zu arretieren, d.h. an einer Bewegung entlang der Führungsbahn 3 zu hindern. Die Arretierungseinrichtung 17 weist in diesem Beispiel Arretierungselemente in Form von zwei Indexierbolzen 19a, 19b auf, die aus einer in Fig. 6 gezeigten zurückgezogenen Stellung durch zwei Durchgangsbohrungen, die in einem radial inneren Abschnitt 23a der Antriebsscheibe 23 gebildet sind, in eine Arretierungsstellung verschoben werden können, in welcher die Indexierbolzen 19a, 19b in die Durchgangsbohrungen eingreifen und die Drehbewegung der Antriebsscheibe 23 um die Drehachse 22 blockieren.

Die Bewegung der Indexierbolzen 19a, 19b in bzw. entgegen der Düsen-Entnahmerichtung Z wird durch einen pneumatischen Kolbenantrieb 18 realisiert, an dessen in horizontaler Richtung (X-Richtung) verschiebbarer Kolbenstange 18a ein H-förmiges Zwischenstück 26 angebracht ist, welches zur Kraftübertragung der Verschiebebewegung der Kolbenstange 18a um 90° von der X-Richtung in die Z-Richtung dient. In jedem der beiden Schenkel des H-förmigen Zwischenstücks 26 ist ein Hohlraum für die Aufnahme eines oberen Abschnitts eines jeweiligen Indexierbolzens 19a, 19b gebildet. In den Seitenwänden eines jeweiligen Schenkels des H-förmigen Zwischenstücks 26 sind Langlöcher 27 gebildet, die unter einem Winkel von ca. 45° sowohl zur Z-Richtung als auch zur X-Richtung verlaufen und in denen die Indexierbolzen 19a, 19b mit zwei an ihrem oberen Ende seitlich vorstehenden Stiften geführt sind. Die Indexierbolzen 19a, 19b verlaufen in Z-Richtung durch Durchgangsbohrungen einer horizontal verlaufenden, ortsfesten Platte 28 (vgl. Fig. 4) und werden bei der Bewegung der Kolbenstange 18a in X-Richtung aufgrund der weiter oben beschriebenen Kraftumlenkung in vertikaler Richtung (Z-Richtung) verschoben.

Befinden sich die Indexierbolzen 19a, 19b in der Arretierungsstellung, wirken diese auf ein Kupplungselement in Form einer Kupplungsscheibe 29 ein, die Teil einer schaltbaren Kupplung 30 ist. In der Arretierungsstellung wird die Kupplungsscheibe 29 durch die Indexierbolzen 19a, 19b nach unten gedrückt, wodurch an der Unterseite der Kupplungsscheibe 29 gebildete, radial verlaufende Rippen in radial verlaufende Rippen eines Zahnrades 31 eingreifen, das Teil eines Montage/Demontage-Antriebs 32 ist. Der Montage/Demontage-Antrieb 32 dient dazu, die an der Übergabeposition UP angeordnete Düsenhalteeinheit 4 um ihre Düsenhalter- Achse 12 zu drehen. Das Zahnrad 31 greift hierbei mit an seiner Außenseite gebildeten, in axialer Richtung verlaufenden Zähnen in die gezahnten Abschnitte 11 derjenigen Düsenhalteeinheiten 4 ein, die in den Einbuchtungen 24 des Antriebsrads 23 aufgenommen sind. Im gezeigten Beispiel werden alle Düsenhalteeinheiten 4, die in den Einbuchtungen 24 des Antriebsrades 23 aufgenommen sind, aufgrund der Drehung des Zahnrades 31 um ihre jeweilige Düsenhalter-Achse 12 gedreht.

Befinden sich die Indexierbolzen 19a, 19b in der Arretierungsstellung, ist auch die Kupplungsscheibe 29 der schaltbaren Kupplung 30 in einer zweiten, unteren Stellung angeordnet, in der die Kupplungsscheibe 29 das Zahnrad 31 des Montage/Demontageantriebs 32 mitnimmt, so dass die Kupplung 30 eine Antriebsverbindung zu dem Antriebsmotor 20 herstellt. Sind die Indexierstifte 19a, 19b hingegen in die in Fig. 6 gezeigte Stellung zurückgezogen und greifen nicht in die Löcher in der Antriebsscheibe 23 ein, befindet sich auch die Kupplungsscheibe 29 in einer ersten, in axialer Richtung (Z-Richtung) oberen Stellung. In der ersten Stellung verkämmen an der Oberseite der Kupplungsscheibe 29 gebildete radial verlaufende Rippen bzw. Zähne mit an der Unterseite des inneren Abschnitts 23a der Antriebsscheibe 23 gebildeten, in radialer Richtung verlaufenden Rippen, so dass die Antriebsscheibe 23 bei der Drehung der Kupplungsscheibe 29 mitgenommen wird. In der ersten, oberen Stellung der Kupplungsscheibe 29 wird somit eine Antriebsverbindung zwischen dem Antriebsmotor 20 und der Antriebsscheibe 23 bzw. dem Positionierantrieb 14 hergestellt.

Die erste, obere Stellung der Kupplungsscheibe 29 stellt eine Grundstellung dar, d.h. die obere Stellung der Kupplungsscheibe 29 wird nur verlassen, wenn die Indexierbolzen 19a, 19b diese nach unten drücken. Um die Kupplungsscheibe 29 in der oberen Stellung zu halten, ist diese an ihrer Unterseite mittels (nicht gezeigter) Druckfedern federbelastet. Die Druckfedern sind an der Oberseite einer drehfest an der Welle 21 gelagerten Scheibe 33 angebracht. Die Scheibe 33 ist in axialer Richtung fest an der Welle 21 gelagert, so dass die Druckfedern sich an dieser abstützen und die Kupplungsscheibe 29 nach oben drücken.

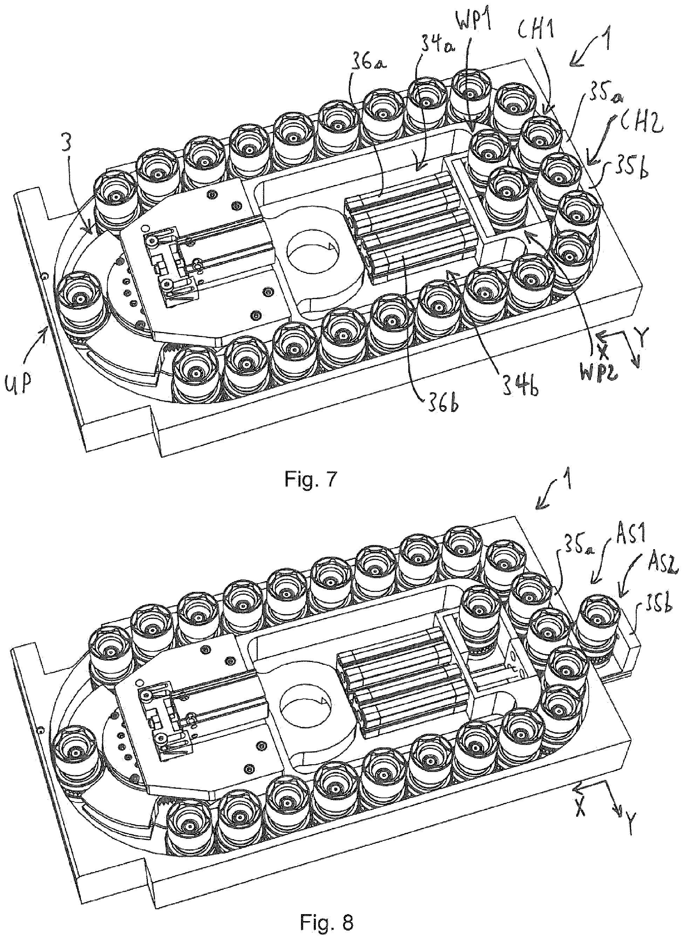

Ein weiteres Ausführungsbeispiel eines Düsenwechslers 1, welches in **Fig. 7** bis **Fig. 9** dargestellt ist, unterscheidet sich von dem in Fig. 4 bis Fig. 6 gezeigten Düsenwechsler 1 im Wesentlichen dadurch, dass an einem der Übergabeposition UP entgegen gesetzten Abschnitt der Führungsbahn 3 zwei Transporteinrichtungen 34a,b gebildet sind, die dem Transport einer jeweiligen Düsenhalteeinheit 4 aus einer Warteposition WP1, WP2 außerhalb der Führungsbahn 3 in eine zugehörige Wechselposition CH1, CH2 in der Führungsbahn 3 dienen. An der Warteposition WP1, WP2 und der Wechselposition CH1, CH2 ist in Fig. 7 jeweils ein Ablageraum einer schubladenartigen Düsenhalter-Aufnahme 35a, 35b gebildet, an dem jeweils genau eine Düsenhalteeinheit 4 abgelegt werden kann. Eine jeweilige Düsenhalteeinheits-Aufnahme 35a, 35b ist an einer Kolbenstange angebracht und kann mit Hilfe eines pneumatischen Kolbenantriebs 36a, 36b in X-Richtung verschoben werden, d.h. quer zur Y-Richtung, entlang derer der Abschnitt der Führungsbahn 3 im Bereich der beiden Wechselpositionen CH1, CH2 verläuft. Wird die Kolbenstange eines jeweiligen Kolbenantriebs 36a, 36b aus der in Fig. 7 gezeigten zurückgezogenen Stellung in eine für die zweite Transporteinrichtung 34b in Fig. 8 gezeigte ausgefahrene Stellung verschoben, wird die an der Warteposition WP2 angeordnete Düsenhalteeinheit 4 in die Wechselposition CH2 innerhalb der Führungsbahn 3 verbracht. Eine jeweilige Düsenhalteeinheits-Aufnahme 35a, 35b der Transporteinrichtung 34a, 34b weist zwei in X-Richtung nebeneinander angeordnete Ablageräume für jeweils eine Düsenhalteeinheit 4 auf. Die Ablageräume der jeweiligen Düsenhalteeinheits-Aufnahme 35a, 35b entsprechen jeweils einem Abschnitt der Führungsbahn, d.h. ein jeweiliger Ablageraum weist zwei parallel verlaufende Ränder auf, die einem jeweiligen Abschnitt der Führungsbahn 3 im Bereich der Wechselposition CH1, CH2 entsprechen.

Bei dem in Fig. 7 und Fig. 8 gezeigten Ausführungsbeispiel, bei dem die Verschiebung der Düsenhalteeinheits-Aufnahmen 35a, 35b quer zur Führungsbahn 3 erfolgt, wird gleichzeitig mit dem Transport der an der Warteposition WP2 angeordneten Düsenhalteeinheit 4 eine an der Wechselposition CH2 angeordnete Düsenhalteeinheit 4 an eine Ausschleusposition AS2 außerhalb der Führungsbahn 3 verschoben. Die an der Ausschleusposition AS2 angeordnete Düsenhalteeinheit 4 kann ggf. aus dem Düsenwechsler 1 entnommen und gegen einen andere Düsenhalteeinheit 4 ausgewechselt werden, während zeitgleich eine Düse 7, die sich in einer an der Übergabeposition UP angeordneten Düsenhalteeinheit 4 befindet, an einer Düsenhalteeinrichtung montiert wird.

Beim Ein-/Auswechseln von Düsenhalteeinheiten 4 in bzw. aus dem Düsenwechsler 1 kann es erforderlich sein, dass der Bediener in einer Maschinen- oder Düsenwechsler-Steuerungseinrichtung eine Eingabe macht, welches Element eingewechselt wurde, d.h. z.B. welchen Düsendurchmesser die in der Düsenhalteeinheit 4 bzw. deren Düsenaufnahme 6 abgelegte Düse aufweist. Vorteilhafterweise kann diese Information aber auch an der Düse oder der Düsenhalteeinheit 4, z.B. in Form eines Barcodes, gespeichert sein, welcher durch eine geeignete Ausleseeinrichtung am Düsenwechsler 1 erfasst werden kann. In diesem Fall ist es auch möglich, dass bei Maschinenstart zunächst eine Bestandsaufnahme der in dem Düsenwechsler 1 gelagerten Düsen durchgeführt wird, bei welcher die jeweiligen Düsen und deren Position in dem Düsenwechsler 1 erfasst werden.

Es versteht sich, dass die Transporteinrichtungen 34a, 34b nur aktiviert werden, wenn kein Vorschub der Düsenhalteeinheiten 4 entlang der Führungsbahn 3 erfolgt. Anders als in Fig. 7 und Fig. 8 gezeigt ist, können die Düsenhalteeinheits-Aufnahmen 35a, 35b auch mehr als zwei, z.B. drei oder mehr in einer Reihe angeordnete Aufnahmeräume aufweisen, in die jeweils eine Düsenhalteeinheit 4 abgelegt werden kann. Auf diese Weise können in ein- und derselben Transporteinrichtung 34a, 34b zwei oder mehre Düsenhalteeinheiten 4 an unterschiedlichen Wartepositionen WP1, WP2 positioniert und an die jeweilige Wechselposition CH1, CH2 transportiert werden. Alternativ zu einer seitlichen Bewegung von Düsenhaltern 4 mittels der Transporteinrichtungen 34a, 34b ist es auch möglich, Düsenhalteeinheiten 4 bzw. einen Ablageraum einer Düsenhalteeinheits-Ablage in vertikaler Richtung (Z-Richtung) oder in anderer Richtung zu bewegen, um diesen an die jeweilige Wechselposition CH1, CH2 zu verbringen. Auch kann der Düsenwechsler 1 ein weiteres Düsenmagazin aufweisen, das wie das weiter oben beschriebene Düsenmagazin 2 ausgebildet ist, d.h. ebenfalls eine geschlossene Führungsbahn 3 aufweist. Beispielsweise können in diesem Fall zwei oder ggf. mehrere Düsenmagazine übereinander angeordnet werden.

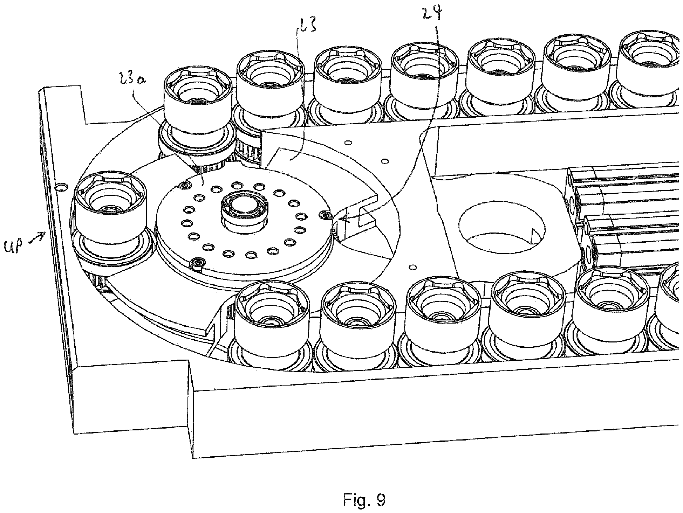

Fig. 9 zeigt ein Detail des Düsenwechslers 1 mit der Antriebsscheibe 23 des Positionierantriebs 14, die sich von der im Zusammenhang mit Fig. 4 bis Fig. 6 beschriebenen Antriebsscheibe 23 dadurch unterscheidet, dass sich die Einbuchtungen 24 in radialer Richtung bis an den inneren Abschnitt 23a der Antriebsscheibe 23 erstrecken, sowie dadurch, dass die Einbuchtungen 24 in Umfangsrichtung der Antriebsscheibe 23 voneinander beabstandet sind. Im gezeigten Beispiel sind benachbarte Einbuchtungen 24 jeweils durch eine sich in Umfangsrichtung über einen Winkel von ca. 50° erstreckende, radial gegenüber den Einbuchtungen 24 vorstehende Ausbuchtungen der Antriebsscheibe 23 getrennt. Beim Vorschub der Düsenhalteeinheiten 4 entlang der Führungsbahn 3 greift eine Kante einer der radial vorstehenden Ausbuchtungen seitlich zwischen zwei benachbarte Düsenhalteeinheiten 4 ein, so dass eine der Düsenhalteeinheiten 4 in der Einbuchtung 24 aufgenommen wird. Die in Fig. 9 gezeigten Einbuchtungen 24 sind so dimensioniert, dass sie genau eine der Düsenhalteeinheiten 4 aufnehmen können und weisen zu diesem Zweck in radialer Richtung eine Erstreckung auf, die ungefähr der Breite der Führungsbahn 3 entspricht. Mit Hilfe der in Fig. 8 gezeigten Antriebsscheibe 23 kann eine jeweilige Düsenhalteeinheit 4 an der Übergabeposition UP vereinzelt werden.

Der Positionierantrieb 14 und der Montage/Demontage-Antrieb 32 entsprechen ansonsten dem im Zusammenhang mit Fig. 4 bis Fig. 6 beschriebenen Ausführungsbeispiel. Allerdings ist der Positionierantrieb 14 bei dem in Fig. 7 bis Fig. 9 gezeigten Beispiel als Schrittantrieb ausgebildet, da die anderen Düsenhalteeinheiten 4 zumindest während eines Teils der Zeitdauer, die einer vollständigen Drehung des Antriebsrads 23 (um 360°) entspricht, nicht entlang der Führungsbahn 3 verschoben werden.

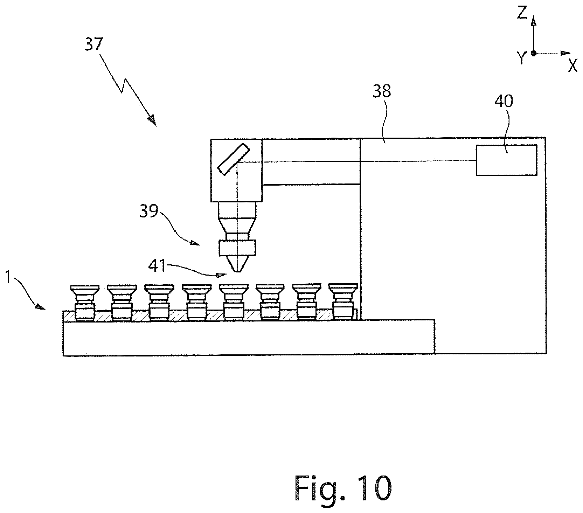

**Fig. 10** zeigt den Düsenwechsler 1 in einer Laserbearbeitungsmaschine 37, welche einen ortsfesten Maschinenkörper 38 und einen Bearbeitungskopf 39 aufweist, der in drei Raumrichtungen X,Y,Z relativ zum Maschinenkörper 38 bewegbar ist. An Stelle eines ortsfesten Maschinenkörpers kann die Laserbearbeitungsmaschine 37 z.B. einen Maschinenkörper in Form eines Roboterarms aufweisen. Der Düsenwechsler 1 befindet sich im Randbereich des Bearbeitungsraumes oder kann in den Bearbeitungsraum eingeschwenkt bzw. eingefahren werden. Die Laserbearbeitungsmaschine 37 weist auch eine Laserstrahlquelle 40 auf, über die ein in Fig. 10 angedeuteter Laserstrahl auf ein (nicht gezeigtes) Werkstück gerichtet werden kann. Es versteht sich, dass die Laserquelle 40 während des Düsenwechsels nicht aktiv ist. Am unteren Ende des Bearbeitungskopfs 39 ist eine Düsenhalteeinrichtung 41 angebracht, die im gezeigten Beispiel die Montage einer Düse 7 mittels einer Schraubverbindung ermöglicht. Es versteht sich, dass die Düsenhalteeinrichtung 41 alternativ oder zusätzlich ausgebildet sein kann, eine Düse 7 beispielsweise durch eine rastende Verbindung bzw. durch eine Steckverbindung an dem Bearbeitungskopf 39 zu halten.

## Patentansprüche

1. Düsenwechsler (1) zur Montage und/oder zur Demontage von Düsen (7) an einer Düsenhalteeinrichtung (41), die insbesondere an einem Bearbeitungskopf (39) einer Laserbearbeitungsmaschine (37) gebildet ist, umfassend:
eine Mehrzahl von Düsenhalteeinheiten (4) zur Lagerung von Düsen (7), wobei mindestens eine, insbesondere alle Düsenhalteeinheiten (4) jeweils eine Düsenaufnahme (6) mit einem nach oben offenen Düsenlagerraum zur Ablage mindestens einer Düse (7) aufweisen,
**gekennzeichnet durch**
ein Düsenmagazin (2) mit einer in sich geschlossenen Führungsbahn (3) zur Lagerung der Mehrzahl von Düsenhalteeinheiten (4), wobei die nicht miteinander verbundenen Düsenhalteeinheiten (4) entlang der in sich geschlossenen Führungsbahn (3) eine Schubgliederkette bilden, sowie
einen Positionierantrieb (14) zur Bewegung der Düsenhalteeinheiten (4) entlang der in sich geschlossenen Führungsbahn (3) für die Positionierung einer der Düsenhalteeinheiten (4) an einer Übergabeposition (UP) entlang der Führungsbahn (3) für die Montage und/oder Demontage einer Düse (7) an der Düsenhalteeinrichtung (41).

2. Düsenwechsler nach Anspruch 1, bei dem die Düsenhalteeinheiten (4) mindestens einen Führungsabschnitt (8a, 8b) mit einer umlaufenden, zu einer Düsenhalter-Achse (12) drehsymmetrischen, insbesondere kreisförmigen Außenkontur (10) aufweisen.

3. Düsenwechsler nach Anspruch 1 oder 2, bei dem die Düsenhalteeinheiten (4) mindestens einen umlaufenden gezahnten Abschnitt (11) aufweisen.

4. Düsenwechsler nach Anspruch 3, bei dem der Positionierantrieb (14) zur Bewegung der Düsenhalteeinheiten (4) entlang der Führungsbahn (3) einen Zahnriemen (13) zum Eingriff in den umlaufenden gezahnten Abschnitt (11) aufweist.

5. Düsenwechsler nach Anspruch 3 oder 4, bei dem der Positionierantrieb (14) zur Bewegung der Düsenhalteeinheiten (4) entlang der Führungsbahn (3) eine Zahnstange (15) zum Eingriff in die umlaufenden gezahnten Abschnitte (11) von mindestens zwei benachbarten Düsenhalteeinheiten (7) aufweist.

6. Düsenwechsler nach einem der Ansprüche 1 bis 3, bei dem der Positionierantrieb (14) eine um eine Drehachse (22) drehbare Antriebsscheibe (23) aufweist, die zur Bewegung der Düsenhalteeinheiten (4) entlang der Führungsbahn (3) zwischen benachbarte Düsenhalteeinheiten (4) eingreift.

7. Düsenwechsler nach Anspruch 6, bei dem die Antriebsscheibe (23) eine Mehrzahl von in Umfangsrichtung der Antriebsscheibe (23) voneinander beabstandeten Einbuchtungen (24) aufweist, die jeweils ausgebildet sind, eine der Düsenhalteeinheiten (4) aufzunehmen.

8. Düsenwechsler nach Anspruch 6, bei dem die Antriebsscheibe (23) eine Mehrzahl von in Umfangsrichtung benachbarten Einbuchtungen (24) aufweist, die jeweils mit der umlaufenden Außenkontur (10) des mindestens einen Führungsabschnitts (8a, 8b) der Düsenhalteeinheiten (4) korrespondieren.

9. Düsenwechsler nach einem der vorhergehenden Ansprüche, weiter umfassend: einen Montage/Demontage-Antrieb (32), der ausgebildet ist, eine an der Übergabeposition (UP) angeordnete Düsenhalteeinheit (4) um eine Düsenhalter-Achse (12) zu drehen.

10. Düsenwechsler nach Anspruch 9, bei dem der Montage/Demontage-Antrieb (32) zur Drehung der Düsenhalteeinheit (4) um seine Düsenhalter-Achse (12) ein Zahnrad (31) aufweist, das in den gezahnten Abschnitt (11) mindestens einer Düsenhalteeinheit (4) eingreift.

11. Düsenwechsler nach Anspruch 4, 9 oder 10, weiter umfassend: einen gemeinsamen Antriebsmotor (20) für den Positionierantrieb (14) und für den Montage/Demontage-Antrieb (14, 32).

12. Düsenwechsler nach Anspruch 11, weiter umfassend: eine schaltbare Kupplung (30) mit einem Kupplungselement (29) zum Herstellen einer Antriebsverbindung zwischen dem Antriebsmotor (20) und dem Positionierantrieb (14) in einer ersten Stellung des Kupplungselements (29) und zum Herstellen einer Antriebsverbindung zwischen dem Antriebsmotor (20) und dem Montage/Demontage-Antrieb (32) in einer zweiten Stellung des Kupplungselements (29).

13. Düsenwechsler nach einem der Ansprüche 10 bis 12, bei dem die Drehachse (22) der Antriebsscheibe (23) des Positionierantriebs (14) und die Drehachse (22) des Zahnrads (31) des Montage/Demontage-Antriebs (32) übereinstimmen.

14. Düsenwechsler nach einem der vorhergehenden Ansprüche, weiter umfassend: eine schaltbare Arretierungseinrichtung (17) zur Arretierung der an der Übergabeposition (UP) zugestellten Düsenhalteeinheit (4) gegen eine Bewegung entlang der Führungsbahn (3).

15. Düsenwechsler nach einem der vorhergehenden Ansprüche, bei dem die Führungsbahn (3) durch zwei parallel verlaufende seitliche Ränder (5a, 5b) begrenzt ist.

16. Düsenwechsler nach einem der vorhergehenden Ansprüche, weiter umfassend: mindestens eine Transporteinrichtung (34a, 34b) zum Transport eines an einer Warteposition (WP1, WP2) außerhalb der Führungsbahn (3) angeordneten Düsenhalters (4) an eine Wechselposition (CH1, CH2) entlang der Führungsbahn (3).

17. Düsenwechsler nach Anspruch 16, bei der die Transporteinrichtung (34a, 34b) ausgebildet ist, während des Transports der Düsenhalteeinheit (4) von der Warteposition (WP1, WP2) in die Wechselposition (CH1, CH2) einen an der Wechselposition (CH1, CH2) angeordnete Düsenhalteeinheit (4) an eine Ausschleusposition (AS1, AS2) außerhalb der Führungsbahn (3) zu transportieren.

18. Laserbearbeitungsmaschine (37) zum Bearbeiten von Werkstücken, umfassend: eine Düsenhalteeinrichtung (41) zur Befestigung einer Düse (7), die bevorzugt an einem Bearbeitungskopf (39) gebildet ist, sowie einen Düsenwechsler (1) nach einem der vorhergehenden Ansprüche zur Montage und/oder zur Demontage einer Düse (7) an der Düsenhalteeinrichtung (41).

## Claims

1. Nozzle changer (1) for fitting nozzles (7) on, and/or for removing nozzles (7) from, a nozzle-retaining device (41), which is formed in particular on a processing head (39) of a laser-processing machine (37), comprising:
a plurality of nozzle-retaining units (4) for storing nozzles (7), wherein at least one nozzle-retaining unit (4) has, in particular all the nozzle-retaining units (4) have, a nozzle mount (6) with a nozzle-storage space which is open in the upward direction and is intended for the storage of at least one nozzle (7),
**characterized by**
a nozzle magazine (2) having a closed guide path (3) for storing the plurality of nozzle-retaining units (4), wherein the non-interconnected nozzle-retaining units (4) form a push chain along the closed guide path (3), and
a positioning drive (14) for moving the nozzle-retaining units (4) along the closed guide path (3) in order to position one of the nozzle-retaining units (4) at a transfer position (UP) along the guide path (3) for fitting a nozzle (7) on, and/or removing a nozzle (7) from, the nozzle-retaining device (41).

2. Nozzle changer according to Claim 1, in which the nozzle-retaining units (4) have at least one guide portion (8a, 8b) with a circumferential, in particular circular, outer contour (10) which is rotationally symmetrical in relation to a nozzle-holder axis (12).

3. Nozzle changer according to Claim 1 or 2, in which the nozzle-retaining units (4) have at least one circumferential, toothed portion (11).

4. Nozzle changer according to Claim 3, in which the positioning drive (14), for moving the nozzle-retaining units (4) along the guide path (3), has a toothed belt (13) for engaging in the circumferential, toothed portion (11).

5. Nozzle changer according to Claim 3 or 4, in which the positioning drive (14), for moving the nozzle-retaining units (4) along the guide path (3), has a rack (15) for engaging in the circumferential, toothed portions (11) of at least two adjacent nozzle-retaining units (7).

6. Nozzle changer according to one of Claims 1 to 3, in which the positioning drive (14) has a drive pulley (23), which can be rotated about an axis of rotation (22) and, for the purpose of moving the nozzle-retaining units (4) along the guide path (3), engages between adjacent nozzle-retaining units (4).

7. Nozzle changer according to Claim 6, in which the drive pulley (23) has a plurality of recesses (24), which are spaced apart from one another in the circumferential direction of the drive pulley (23) and are each designed to accommodate one of the nozzle-retaining units (4).

8. Nozzle changer according to Claim 6, in which the drive pulley (23) has a plurality of recesses (24), which are adjacent in the circumferential direction and each correspond with the circumferential outer contour (10) of the at least one guide portion (8a, 8b) of the nozzle-retaining units (4).

9. Nozzle changer according to one of the preceding claims, also comprising: a fitting/removal drive (32), by means of which a nozzle-retaining unit (4) arranged at the transfer position (UP) is rotated about a nozzle-holder axis (12).

10. Nozzle changer according to Claim 9, in which, for the purpose of rotating the nozzle-retaining unit (4) about its nozzle-holder axis (12), the fitting/removal drive (32) has a gearwheel (31), which engages in the toothed portion (11) at least of one nozzle-retaining unit (4).

11. Nozzle changer according to Claim 4, 9 or 10, further comprising: a drive motor (20) common to both the positioning drive (14) and the fitting/removal drive (14, 32).

12. Nozzle changer according to Claim 11, further comprising: a switchable coupling (30) with a coupling element (29) for establishing a drive connection between the drive motor (20) and the positioning drive (14) in a first position of the coupling element (29) and for establishing a drive connection between the drive motor (20) and the fitting/removal drive (32) in a second position of the coupling element (29).

13. Nozzle changer according to one of Claims 10 to 12, in which the axis of rotation (22) of the drive pulley (23) of the positioning drive (14) and the axis of rotation (22) of the gearwheel (31) of the fitting/removal drive (32) coincide.

14. Nozzle changer according to one of the preceding claims, further comprising: a switchable arresting device (17), by means of which the nozzle-retaining unit (4) advanced up to the transfer position (UP) is arrested against moving along the guide path (3).

15. Nozzle changer according to one of the preceding claims, in which the guide path (3) is delimited by two lateral peripheries (5a, 5b) running parallel to one another.

16. Nozzle changer according to one of the preceding claims, further comprising: at least one transporting device (34a, 34b), by means of which a nozzle holder (4) arranged at a standby position (WP1, WP2) outside the guide path (3) is transported to a changeover position (CH1, CH2) along the guide path (3).

17. Nozzle changer according to Claim 16, in which, while the nozzle-retaining unit (4) is being transported from the standby position (WP1, WP2) to the changeover position (CH1, CH2), a nozzle-retaining unit (4) arranged at the changeover position (CH1, CH2) is transported by the transporting device (34a, 34b) to a removal position (AS1, AS2) outside the guide path (3).

18. Laser-processing machine (37) for processing workpieces, comprising:
a nozzle-retaining device (41), which is intended for fastening a nozzle (7) and is formed preferably on a processing head (39), and a nozzle changer (1) according to one of the preceding claims for fitting a nozzle (7) on, and/or for removing a nozzle (7) from, the nozzle-retaining device (41).

## Revendications

1. Changeur (1) de buses, dévolu au montage et/ou au démontage de buses (7) implantées sur un dispositif (41) de retenue desdites buses ménagé, en particulier, sur une tête d'usinage (39) d'une machine (37) d'usinage au laser, comprenant :
une pluralité d'unités de maintien (4) dédiées au stockage de buses (7), au moins l'une, et notamment l'intégralité desdites unités de maintien (4) comportant un logement respectif (6) muni d'un espace de stockage de buses, ouvert vers le haut et affecté au dépôt d'au moins une buse (7),
**caractérisé**
**par** un magasin (2) à buses, doté d'une piste de guidage (3) fermée en soi et affectée au stockage de la pluralité d'unités (4) de maintien des buses, lesdites unités de maintien (4), non reliées les unes aux autres, formant une chaîne de poussée à maillons le long de ladite piste de guidage (3) fermée en soi ; ainsi que
par un entraînement de positionnement (14) conçu pour mouvoir lesdites unités (4) de maintien des buses le long de ladite piste de guidage (3) fermée en soi, afin de positionner l'une desdites unités de maintien (4) en un emplacement de transfert (UP), le long de ladite piste de guidage (3), en vue du montage et/ou du démontage d'une buse (7) implantée sur le dispositif (41) de retenue des buses.

2. Changeur de buses, selon la revendication 1, dans lequel les unités (4) de maintien des buses présentent au moins une région de guidage (8a, 8b) pourvue d'un profil extérieur (10) à étendue circonférentielle, notamment circulaire, symétrique en rotation par rapport à un axe (12) de maintien desdites buses.

3. Changeur de buses, selon la revendication 1 ou 2, dans lequel les unités (4) de maintien des buses présentent au moins une région dentée (11) à étendue circonférentielle.

4. Changeur de buses, selon la revendication 3, dans lequel l'entraînement de positionnement (14) comporte, en vue de mouvoir les unités (4) de maintien des buses le long de la piste de guidage (3), une courroie crantée (13) conçue pour engrener dans la région dentée (11) à étendue circonférentielle.

5. Changeur de buses, selon la revendication 3 ou 4, dans lequel l'entraînement de positionnement (14) comporte, en vue de mouvoir les unités (4) de maintien des buses le long de la piste de guidage (3), une crémaillère (15) conçue pour engrener dans les régions dentées (11), à étendue circonférentielle, d'au moins deux unités voisines (4) de maintien desdites buses.

6. Changeur de buses, selon l'une des revendications 1 à 3, dans lequel l'entraînement de positionnement (14) est équipé d'un disque d'entraînement (23) qui est apte à tourner autour d'un axe de rotation (22) et s'engage entre des unités voisines (4) de maintien des buses, en vue de mouvoir lesdites unités de maintien (4) le long de la piste de guidage (3).

7. Changeur de buses, selon la revendication 6, dans lequel le disque d'entraînement (23) comporte une pluralité d'échancrures (24) espacées les unes des autres dans la direction périphérique dudit disque d'entraînement (23), qui sont respectivement conçues pour recevoir l'une des unités (4) de maintien des buses.

8. Changeur de buses, selon la revendication 6, dans lequel le disque d'entraînement (23) comporte une pluralité d'échancrures (24) voisines dans la direction périphérique, qui concordent respectivement avec le profil extérieur (10), à étendue circonférentielle, de la région de guidage (8a, 8b) à présence minimale sur les unités (4) de maintien des buses.

9. Changeur de buses, selon l'une des revendications précédentes, comprenant en outre : un entraînement (32) de montage/démontage conçu pour imprimer des rotations, autour d'un axe (12) de maintien des buses, à une unité (4) de maintien desdites buses qui se trouve à l'emplacement de transfert (UP).

10. Changeur de buses, selon la revendication 9, dans lequel l'entraînement (32) de montage/démontage comporte, en vue de faire tourner l'unité (4) de maintien des buses autour de son axe (12) de maintien desdites buses, une roue dentée (31) engrenant dans la région dentée (11) d'au moins une unité de maintien (4).

11. Changeur de buses, selon la revendication 4, 9 ou 10, comprenant en outre : un moteur d'entraînement (20) commun, affecté à l'entraînement de positionnement (14) et à l'entraînement (32) de montage/démontage.

12. Changeur de buses, selon la revendication 11, comprenant en outre : un accouplement commutable (30) muni d'un élément d'accouplement (29), en vue d'instaurer une liaison d'entraînement entre le moteur d'entraînement (20) et l'entraînement de positionnement (14), dans une première position de l'élément d'accouplement (29), et d'instaurer une liaison d'entraînement entre ledit moteur d'entraînement (20) et l'entraînement (32) de montage/démontage dans une seconde position dudit élément d'accouplement (29).

13. Changeur de buses, selon l'une des revendications 10 à 12, dans lequel l'axe de rotation (22) du disque d'entraînement (23) de l'entraînement de positionnement (14), et l'axe de rotation (22) de la roue dentée (31) de l'entraînement (32) de montage/démontage, coïncident l'un avec l'autre.

14. Changeur de buses, selon l'une des revendications précédentes, comprenant en outre : un dispositif d'arrêt (17) commutable, conçu pour interdire un mouvement, le long de la piste de guidage (3), de l'unité (4) de maintien des buses qui est présentée à l'emplacement de transfert (UP).

15. Changeur de buses, selon l'une des revendications précédentes, dans lequel la piste de guidage (3) est délimitée par deux rebords latéraux (5a, 5b) s'étendant parallèlement.

16. Changeur de buses, selon l'une des revendications précédentes, comprenant en outre : au moins un dispositif de transport (34a, 34b) conçu pour transporter vers un emplacement d'échange (CH1, CH2), le long de la piste de guidage (3), une unité (4) de maintien des buses qui occupe un emplacement d'attente (WP1, WP2) à l'extérieur de ladite piste de guidage (3).

17. Changeur de buses, selon la revendication 16, dans lequel le dispositif de transport (34a, 34b) est conçu pour transporter vers un emplacement d'évacuation (AS1, AS2) à l'extérieur de la piste de guidage (3), au cours du transport de l'unité (4) de maintien des buses vers l'emplacement d'échange (CH1, CH2) à partir de l'emplacement d'attente (WP1, WP2), une unité (4) de maintien desdites buses qui occupe ledit emplacement d'échange (CH1, CH2).

18. Machine (37) d'usinage au laser, conçue pour usiner des pièces et comprenant : un dispositif (41) de retenue de buses, dévolu à la fixation d'une buse (7) et ménagé, de préférence, sur une tête d'usinage (39), ainsi qu'un changeur (1) de buses conforme à l'une des revendications précédentes, dévolu au montage et/ou au démontage d'une buse (7) implantée sur ledit dispositif de retenue (41).
